# EUROPEAN PATENT APPLICATION

(11) **EP 2 384 872 A2**
(43) Date of publication of application: **09.11.2011**
(21) Application number: 09830538.6
(22) Date of filing: 23.11.2009
(51) Int. Cl.: B29B 17/00, C08J 11/00

(54) **METHOD FOR RECYCLING WASTE TIRES**

(30) Priority: 01.12.2008 KR 20080120486
(71) Applicant: Jeon, Yeong Min, Daejeon 302-792 (KR)
(72) Inventor: Jeon, Yeong Min, Daejeon 302-792 (KR)
(74) Representative: Heine, Christian Klaus
(86) International application number: PCT/KR2009/006886
(87) International publication number: WO 2010/064800

(57) **Abstract**

Disclosed a method for recycling waste tires. The method comprises the steps of: sealing the inside of a pyrolysis furnace into which waste tires are inserted and injecting a carrier gas thereinto; pyrolyzing the waste tires by direct heating of the waste tires by the carrier gas injected into the pyrolysis furnace; and collecting oil by passing vapor generated in the pyrolysis step through at least one oil collection factor such as cooling, condensation, or centrifugal force. The method for recycling waste tires enables pyrolysis of the waste tires through circulatory supply of the carrier gas and direct heating, and thus prevents danger of explosion caused by conventional direct heating, secures safety, and improves oil collection rate via the direct heating.

## Description

### TECHNICAL FIELD

The present invention relates to a method for recycling waste tires comprising pyrolyzing waste tires that are industrial waste by direct heating, and separating and extracting various energy sources to be recycled. More particularly, the present invention relates to a system for recycling waste tires that enables pyrolyzing waste tires by direct heating with a carrier gas, thereby allowing economical operation and improving the yield of the extracted oil.

### BACKGROUND ART

Recently, as the demand for vehicles is sharply on the rise, so does for tires increases. Accordingly, the quantity of waste tires also increases.

As well known, waste tires are mainly made of synthetic polymer compounds, having about 34 MJ/kg of heat produced, which is higher than the reference value of coal, 29MJ/kg.

Further, except for iron core, fabrics such as nylon, etc., the average composition of a piece of tire is composed of 43.5 wt% of styrene-butadiene copolymer (SBR polymer), 32.6 wt% of carbon black, 21.7 wt% of oil, and 2.2 wt% of additives such as sulfur, zinc oxide, etc.

When combusting such waste tires, environmental contaminants such as sulfur oxides, unburned hydrocarbon, harmful gas, etc. are significantly emitted. Thus, the Ministry of Environment prohibits the use of waste tires as fuel.

Accordingly, ways of using waste tires other than by combustion have been studied, and recycled products such as sidewalk blocks, reproduced tires, reproduced rubbers, artificial reefs, buffers of various structures, etc. are being produced, but to a limited scope. Further, in a product molding process for recycling, wastes and air pollution are another concern. In addition, there is still a problem of environmental contamination caused by wastes produced when the recycled products are discarded.

Meanwhile, methods for transforming the waste tires into fuel, not for recycling them have been attempted. For such transformation of waste tires into fuel, pyrolysis furnaces for pyrolyzing waste tires are employed. According to heating methods, pyrolysis furnaces are divided into direct heating type pyrolysis furnaces and indirect heating type pyrolysis furnaces.

Here, direct heating type pyrolysis furnaces could face explosion caused by chemical reaction of spark produced when heating waste tires with oxygen within the pyrolysis furnaces. Further, the oil produced from direct heating type pyrolysis furnaces contains moisture and free carbon, which deteriorate the quality of the extracted oil.

Meanwhile, indirect heating type pyrolysis furnaces do not have danger of explosion of direct heating type pyrolysis furnaces as explained above. However, because of low thermal efficiency, most of the oil obtained as a by-product has to be used as fuel. Thus, waste tires recycling systems wherein indirect heating type pyrolysis furnaces are employed are economically infeasible and it is difficult to deal with carbon obtained as a by-product.

### DETAILED DESCRIPTION OF THE INVENTION

### TECHNICAL SUBJECT

The present invention has been created in order to solve the above problems that existing techniques have. The present invention is to provide a method for recycling waste tires capable of combusting waste tires through circulatory supply of a carrier gas and direct heating, which enables to prevent explosion of a pyrolysis furnace and secure safety, and at the same time, to collect high purity oil without moisture and free carbon and to be economically operated.

Another aim of the present invention is to provide a method for recycling waste tires comprising supplying various types of carrier gas from outside or using a noncondensable gas generated in the combustion, thereby allowing extremely economical operation.

### MEANS FOR SOLVING THE SUBJECT

In order to achieve the above aims, a method for recycling waste tires according to a desirable embodiment of the present invention is characterized by comprising sealing the inside of a pyrolysis furnace into which waste tires are inserted and injecting a carrier gas thereinto; pyrolyzing the waste tires by direct heating with the carrier gas injected into the pyrolysis furnace; and collecting oil by passing vapor generated in the pyrolysis step through at least one oil collection element of cooling, condensation, or centrifugal force.

A desirable characteristic according to the present invention lies in that in the step of injecting a carrier gas, the carrier gas injected into the pyrolysis furnace passes the oil collection factor and a heat exchanger with vapor generated from the pyrolyzed waste tires to be circulated and supplied to the pyrolysis furnace.

Another desirable characteristic according to the present invention lies in that the step of collecting oil consecutively passes the following steps: a first oil collection comprising a condenser cooling and condensing supplied vapor to transfer the cooled and condensed vapor to an oil tank; and a second oil collection comprising one or more cyclone collecting oil from supplied vapor that has not been collected in the first oil collection or oil mist consisting of small oil particles through centrifugal force to transfer the collected oil to the oil tank.

Another desirable characteristic according to the present invention lies in that the step of injecting a carrier gas further comprises that residues of the waste tires that were inserted into the pyrolysis furnace and pyrolyzed are eliminated outside to be pulverized and discharged by residue treatment step.

Another desirable characteristic according to the present invention lies in that in the step of injecting a carrier gas, the pyrolysis furnace is selectively supplied with a carrier gas through a carrier gas supply device comprising filler elements filled with a carrier gas formed by mixing at least one components of carbon dioxide, nitrogen, methanes, ethanes, propanes, butanes, pentanes, hexanes, ammonia and argons.

Another desirable characteristic according to the present invention lies in that the step of injecting a carrier gas comprises detecting oxygen by an oxygen detector installed in a carrier gas circulation line; and removing oxygen present in the carrier gas circulation line if oxygen is detected, by approval of a sensing information connected to the oxygen detector by employing an electric heater generating heat by power supply or a heating element generating heat by being supplied with heat source of the heat exchanger.

Another desirable characteristic according to the present invention lies in that the pyrolysis step further comprises collecting a noncondensable gas generated in the combustion of waste tires in the pyrolysis furnace and storing the collected gas; and supplying the collected and stored noncondensable gas to the carrier gas circulation line that is connected to the pyrolysis furnace.

Another desirable characteristic according to the present invention lies in that the step of supplying the noncondensable gas to the carrier gas circulation line further comprises measuring the internal pressure of the carrier gas circulation line; measuring the temperature inside of the pyrolysis furnace; and collecting a noncondensable gas flowing in the carrier gas circulation line and storing the collected gas if the pressure in the carrier gas circulation line is 100 mmAq or higher and the temperature in the pyrolysis furnace is 200°C or higher.

The characteristics and advantageous according to the present invention will be more clear by the following detailed descriptions based on the accompanying drawings. Meanwhile, the terms or words used in the specification and claims should not be interpreted as conventional and dictionary meanings, but should be interpreted as meanings and concepts in accordance with the technical idea of the present invention based on the principle that inventors can appropriately define concepts of terms in order to explain the invention the best possible way.

### EFFECT OF THE INVENTION

A method for recycling waste tires according to the present invention comprising pyrolzying waste tires through circulatory supply of a carrier gas and direct heating enables to prevent danger of explosion caused by existing direct heating methods and secure safety, and to improve the yield of collected oil by direct heating.

In particular, a method for recycling waste tires according to the present invention comprises supplying various types of carrier gas from outside or using a noncondensable gas generated in the combustion, thereby allowing extremely economical operation. Further, as for significantly useful industrial usage, it is expected that a method for recycling waste tires according to the present invention can be applied to furnaces or small-sized power stations for district heating in addition to for dealing with waste tires.

### BRIEF DISCRIPTION OF DRAWINGS

Fig. 1 is a schematic drawing for explaining a method for recycling waste tires according to the present invention.
Fig. 2 is a flow chart for explaining a method for recycling waste tires according to the present invention.
Fig. 3 is a flow chart for showing an embodiment of a method for injecting a carrier gas in a method for recycling waste tires according to the present invention.
Fig. 4 is a flow chart for showing another embodiment of a method for injecting a carrier gas in a method for recycling waste tires according to the present invention.

### BEST EMBODIMENTS FOR CARRYING OUT THE INVENTION

The objects, characteristics and advantages of the present invention described above will be more apparent by the following detailed descriptions.

Hereinafter, with reference to the accompanying drawings, the desirable embodiment of the present invention will be described as follows.

First of all, it should be noted that in the Figures, the same constitutional elements or components are represented by the same reference numerals as possible. In describing the present invention, detailed explanations about relevant known functions or configurations are omitted in order not to make the gist of the present invention ambiguous.

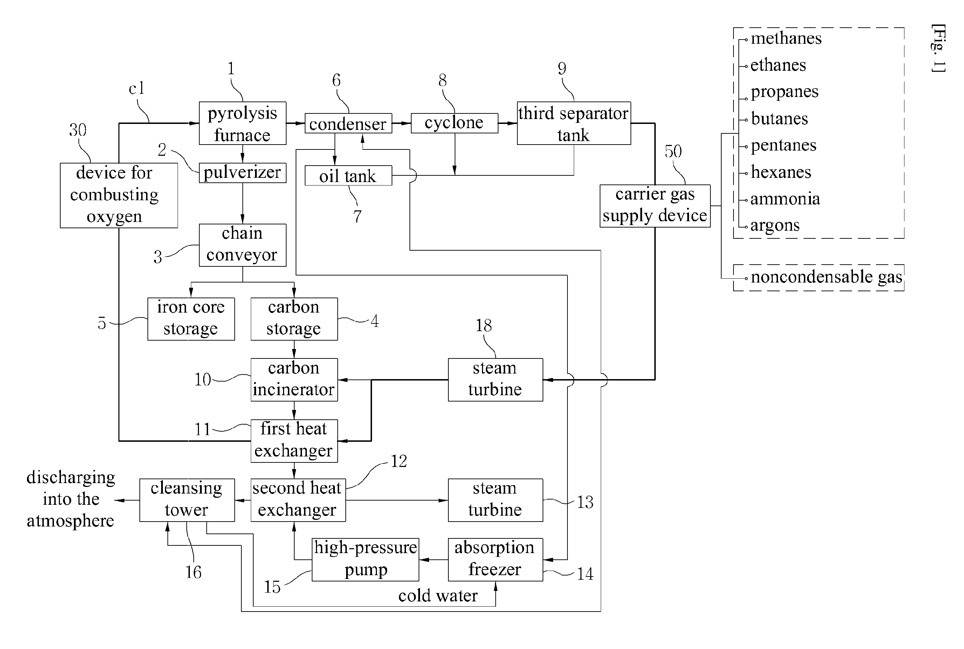

Figure 1 is a schematic diagram showing a configuration according to one embodiment of a system for recycling waste tires for implementing a method for recycling waste tires according to the present invention, and reference numerals for main elements will be explained as below.

Reference numeral 1 represents a pyrolysis furnace 1 which is an element for pyrolyzing by direct heating using a gas formed by mixing at least one component of carbon dioxide (CO₂), nitrogen (N₂), methane, ethane, propane, butane, pentane, hexane, ammonia, and argon as a carrier gas. The pyrolysis furnace 1 is provided at its top part with a throw-in port into which waste tires are inserted, provided at one part with an exhaust port through which the high temperature of vapor generated by the pyrolysis is circulated and an air exhaust port through which air is exhausted when initially operating, and provided at its bottom part with a discharge port through which pyrolyzed residues are discharged.

Reference numeral 2 represents a residue processor provided at the bottom part of the discharge port in said pyrolysis furnace 1, the residue processor pulverizing the pyrolyzed residues. Reference numeral 3 represents a chain conveyor for separating pulverized carbon and iron core. Reference numeral 4 represents a carbon storage 4 and an iron core storage 5 for storing the carbon and iron-core separated by said chain conveyor 3, respectively.

Reference numeral 6 represents a condenser for cooling and condensing the high temperature of vapor that is exhausted through the exhaust port of said pyrolysis furnace 1. Reference numeral 7 represents an oil tank for collecting oil separated in the cooling and condensing process. Reference numeral 8 represents a cyclone for collecting oil components that are not collected in the cooling and condensing process and are moving like gas together with a carrier gas.

Then, reference numeral 9 represents a third separator tank for directly contacting oil mist that has not been collected in said cyclone 8 with liquid oil aerationally to collect the oil mist.

Reference numeral 10 represents a carbon incinerator in which carbon stored in said carbon storage 4 is transferred and incinerated by self-heating. Reference numeral 11 represents a first heat exchanger for receiving the high temperature of exhaust gas generated in said carbon incinerator 10, heating the cooled carrier gas at a high temperature, and then supplying the high temperature of carrier gas to said pyrolysis furnace 1. Reference numeral 12 represents a second heat exchanger for making high-pressure steam using the exhaust gas passing through said first heat exchanger 11. Reference numeral 13 represents a steam turbine for producing electricity using the high-pressure steam.

Reference numeral 14 represents a freezer being supplied with low-pressure stream (about 5Kg/cm²) that is used in and exhausted from said steam turbine 13 to produce and condense cold water. Reference numeral 15 represents a high-pressure pump for pumping condensation water to be circulated to said second heat exchanger 12.

Reference numeral 16 represents a cleansing tower for cleaning exhaust gas that is exhausted from said second heat exchanger 12. Reference numeral 18 represents a blower.

The operation of each factor of the system for recycling waste tires having the above configurations is described as below.

The pyrolysis furnace 1 is a factor for pyrolyzing waste tires by direct heating by being supplied with a noncondensable gas through a carrier gas circulation supply device 20 which will be described below and using the noncondensable gas as a carrier gas. The pyrolysis furnace 1 is provided with a throw-in port into which waste tires are inserted, a discharge port through which pyrolyzed residues are discharged, and an exhaust port through which the high temperature of vapor generated by the pyrolysis is exhausted. Air inside of the pyrolysis furnace 1 is exhausted outside by injection of the carrier gas, and the circulation exhaust port is open under a circumstance where the exhaust of the air has been completed so as to circulate the noncondensable gas generated in the combustion of waste tires. Here, the circulation path of the noncondensable gas is represented by c1 in the Figure. That is, the heated vapor generated in the combustion of waste tires that are inserted into the pyrolysis furnace 1 passes the condenser 6, the cyclone 8 and the third separator tank 9, and then passes the blower 18 and the first heat exchanger 11 to be circulated to the pyrolysis furnace 1.

Pyrolyzed residues processing means comprises a residue processor 2 being made of a pair of rollers and for carrying out pulverization on residues inserted therebetween, a chain conveyor 3 for separating pulverized carbon and iron core during the movement of the conveyor, and a carbon storage 4 and an iron core storage 5 for storing the carbon and iron core separated by said chain conveyor 3, respectively.

Oil collection means is a factor for separating and extracting oil from the high temperature of vapor generated in the pyrolysis furnace 1, and comprises a condenser 6 for cooling and condensing the high temperature of vapor, an oil tank 7 for storing the oil first-separated by the cooling and condensation of the condenser 6, a cyclone 8 for second collecting aerial oil components by powerful vortex and transferring the collected oil components to said oil tank 7, and a third separator tank 9 for collecting the oil mist which has not been collected in the cyclone 8 by directly contacting the oil mist with liquid oil aerationally. Here, the step of collecting oil aerationally could be excluded.

Carbon processing means comprises a carbon incinerator 10 for incinerating carbon supplied from said carbon storage 4 to produce the high temperature of exhaust gas, first and second heat exchangers 11, 12 for heating the exhaust gas at a high temperature, a vapor turbine 13 being supplied with high pressure steam generated in the second heat exchange to produce electricity, an absorbing-type freezer 14 being supplied low pressure stream to produce condensate, and a high-pressure pump 15 for circulating the condensate to said second heat exchanger 12.

Such configuration is similar to a configuration of a system for recycling waste tires, which was first-filed and patented by the present applicant. The present invention, however, does not add a device or equipment for supplying and circulating a separate carrier gas made of carbon dioxide or nitrogen, but is characterized by additionally comprising a carrier gas circulation supply device 20 and an oxygen removing heating device 30 for collecting a noncondensable gas naturally generated in the combustion of waste tires to circulate and supply the noncondensable gas as a carrier gas, thereby increasing economical efficiency and yield of extracted oil.

The carrier gas circulation supply device 20 of the present invention is connectively installed in a carrier gas circulation line c1.

Here, the carrier gas circulation line c1 refers to a path through which a carrier gas passes the pyrolysis furnace 1 and the oil collection means to be circulated to the pyrolysis furnace 1, and it is represented by reference numeral c1 in the Figures.

The carrier gas circulation supply device 20 installed in the carrier gas circulation line c1 comprises sensing elements for measuring the temperature within the pyrolysis furnace 1 and the pressure within the carrier gas circulation line c1, and operates for collecting a noncondensable gas generated in the pyrolysis furnace 1 and storing the collected noncondensable gas, and then selectively circulating and supplying the stored noncondensable gas to the pyrolysis furnace 1.

Here, the carrier gas circulation supply device 20 comprises a pressure measuring unit 21 for measuring the internal pressure of the carrier gas circulation line c1, and a temperature measuring unit 23 for measuring the temperature within the pyrolysis furnace 1. The pressure measuring unit 21 and the temperature measuring unit 23 can be implemented by known mechanical or electronic sensors, and thus their detailed explanations are omitted.

In addition, the carrier gas circulation supply device 20 comprises a noncondensable gas storage tank 27 being connected to the carrier gas circulation line c1 and selectively supplied with a noncondensable gas and storing it, and valves 25, 29 being installed in a pipeline connecting the noncondensable gas storage tank 27 and the carrier gas circulation line c1 and for selectively supplying the noncondensable gas to said noncondensable gas storage tank 27 and storing it or transferring the noncondensable gas stored in said noncondensable gas storage tank 27 to said carrier gas circulation line c1 to be supplied to said pyrolysis furnace 1.

Meanwhile, the carrier gas circulation supply device 20 uses the pressure measuring unit 21 and the temperature measuring unit 23, which are provided as the sensing elements, in order to determine if a noncondensable gas is generated in the combustion of waste tires that are inserted into the pyrolysis furnace 1.

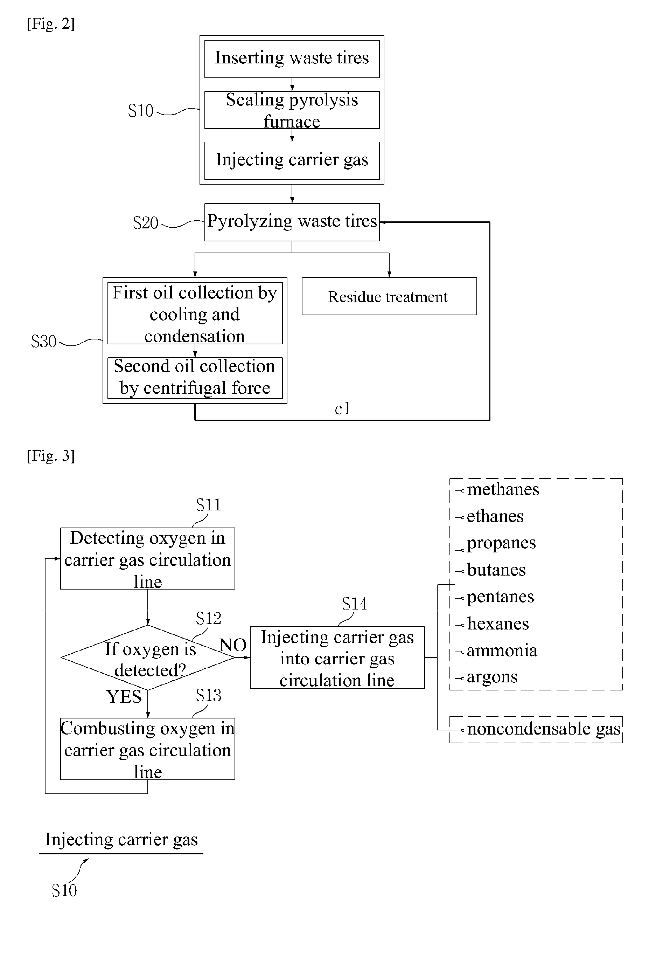

In the present invention, if the pressure measuring unit 21 installed in the carrier gas circulation line c1 and measuring the internal pressure measures a preset value 100mmAq or higher, and the temperature measuring unit 23 for measuring the temperature inside of the pyrolysis furnace 1 measures a preset value 200°C or higher, it is determined that a noncondensable gas is generated in the pyrolysis furnace 1, so that among the valves 25, 29, a valve represented by reference numeral 25 in Figure 3 is open to connect the carrier gas circulation line c1 and the noncondensable gas storage tank 27, and a compressor (no reference numeral) at one side is driven to supply and store the flowing noncondensable gas inside of said carrier gas circulation line c1.

In contrast, if the pressure measuring unit 21 and the temperature measuring unit 23 measure less than a preset value, a valve corresponding to reference numeral 25 is off and a valve corresponding to reference numeral 29 is open so as to transfer the noncondensable gas stored in said noncondensable gas storage tank 27 to the carrier gas circulation line c1 to be supplied to said pyrolysis furnace 1.

Meanwhile, the present invention is characterized by additionally installing an oxygen removing heating device 30 in said carrier gas circulation line c1 in order to remove oxygen present in pyrolysis furnace 1.

In other words, in said carrier gas circulation line c1, the oxygen removing heating device 30 is installed, the oxygen removing heating device 30 consisting of an electric heater comprising an electrothermal wire selectively heating by power supply or a heating element generating heat at a high temperature by being supplied with heat source of a heat exchanger. For the oxygen removing heating device 30, an electric heater comprising a thermal wire generating heat, preferably, at 300°C or higher may be used.

Hereinafter, with reference to Figure 1, a method for recycling waste tires according to the present invention, which is shown in Figures 2~4, will be described.

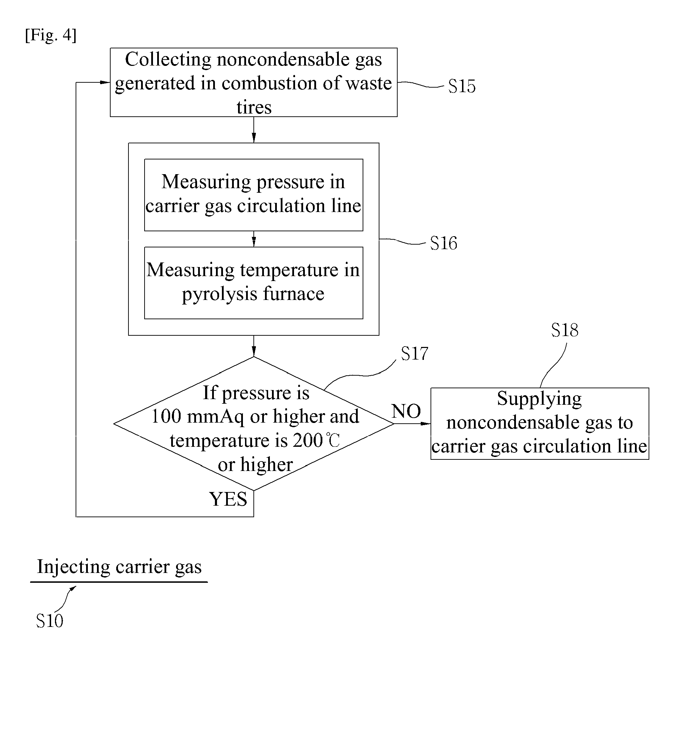

Figure 2 is a flowchart for explaining a method for recycling waste tires according to the present invention. Figure 3 is a flowchart for explaining a method for operating a system for supplying a carrier gas outside in the method for recycling waste tires according to the present invention. Figure 4 is a flowchart for explaining an operating method for circulating and supplying a noncondensable gas generated in the combustion of waste tires as a carrier gas in the method for recycling waste tires according to the present invention.

As shown in those Figures, the method for recycling waste tires according to the present invention comprises: sealing the inside of the pyrolysis furnace 1 into which waste tires are inserted and injecting a carrier gas thereinto (S10); pyrolizing the waste tires by direct heating with the carrier gas injected into the pyrolysis furnace 1 (S20); and collecting oil by passing vapor generated in the pyrolysis step through at least one oil collection factor such as cooling, condensation, or centrifugal force (S30).

In the step of injecting the carrier gas (S10), according to the present invention, the carrier gas injected into the pyrolysis furnace 1 passes the oil collection factor and a heat exchanger with vapor generated from the pyrolyzed tires to flow along the circulation line c1 through which the carrier gas is circulated to the pyrolysis furnace 1.

Meanwhile, for injecting a carrier gas, the present invention, as shown in Figure 3, suggests selectively supplying a carrier gas through the carrier gas supply device (50) comprising filler elements filled with a carrier gas formed by mixing at least one components of carbon dioxide, nitrogen, methane, ethane, propane, butane, pentane, hexane, ammonia, and argon to the pyrolysis furnace 1.

Here, when supplying the carrier gas formed by mixing at least one components of carbon dioxide, nitrogen, methane, ethane, propane, butane, pentane, hexane, ammonia, and argon, the present invention comprises: detecting oxygen through an oxygen detector installed in a carrier gas circulation line c1 (S11); determining if the oxygen is detected (S12); if the oxygen is detected, combusting to remove the oxygen in the carrier gas circulation line c1 (S13); and if the oxygen is not detected, supplying a carrier gas into the carrier gas circulation line c1 (S14).

Here, in the step of detecting oxygen, an oxygen detector is used, and for removing the oxygen, an electric heater generating heat by power supply or a heating element (heating coil) generating heat by being supplied with heat source of the heat exchange may be used.

In the pryolysis step (S20), the present invention, shown in Figure 4, suggests a method for circulating and supplying a noncondensable gas generated in the combustion of waste tire as a carrier gas, not supplying a separate carrier gas from the outside, unlike Figure 3.

To be specific, in the pryolysis step (S20), the present invention comprises: collecting a noncondensable gas generated in the combustion of waste tires in the pyrolysis furnace 1 to store the collected gas (S15); and measuring the pressure within the carrier gas circulation line c1 and the temperature within the pyrolysis furnance 1, and if the measurements are a preset value or higher, collecting the noncondensable gas to store the collected gas, and if the measurements are less than a preset value, supplying the stored noncondensable gas to the carrier gas circulation line c1 (S18).

Here, the present invention collects a noncondensable gas flowing in the carrier gas circulation line c1 to store the controlled gas if the pressure in the carrier gas circulation line is 100 mmAq or higher and the temperature within the pyrolysis furnace 1 is 200°C or higher, or supplies the collected and stored carrier gas in the carrier gas circulation line c1 if the pressure and temperature are less than a preset value.

The present invention suggests that the step of collecting oil consecutively (S30) passes the following steps: a first oil collection comprising a condenser being supplied with vapor generated by the combustion of waste tires and cooling and condensing the vapor to transfer the cooled and condensed vapor to an oil tank (S31); and a second oil collection comprising one or more cyclones collecting oil from supplied vapor that has not been collected in the first oil collection or oil mist consisting of small oil particles through centrifugal force to transfer the collected oil to the oil tank (S32).

Meanwhile, in the pyrolysis step (S20), the present invention suggests further comprising: residues of the waste tires that were put into the pyrolysis furnace 1 and pyrolyzed being eliminated outside to be pulverized and discharged by residue treatment step (S25).

Meanwhile, the present invention is not limited to examples described above, and it is apparent to those skilled in the art that various alternatives, modifications and variations can be made without departing from the idea and scope of the invention. Thus, such variations and modifications fall within the scope of the claims of the present invention.

## Claims

1. A method for recycling waste tires, **characterized by** comprising:
sealing the inside of a pyrolysis furnace into which waste tires are inserted and injecting a carrier gas thereinto;
pyrolyzing the waste tires by direct heating with the carrier gas injected into the pyrolysis furnace; and
collecting oil by passing vapor generated in the pyrolysis step through at least one oil collection element of cooling, condensation, or centrifugal force.

2. A method for recycling waste tires according to Claim 1, **characterized in that** in the step of injecting a carrier gas, the carrier gas injected into the pyrolysis furnace passes the oil collection element and a heat exchanger with vapor generated from the pyrolyzed waste tires to be circulated and supplied to the pyrolysis furnace.

3. A method for recycling waste tires according to Claim 1, **characterized in that** the step of collecting oil consecutively passes the following steps:
a first oil collection comprising a condenser cooling and condensing supplied vapor to transfer the cooled and condensed vapor to an oil tank; and
a second oil collection comprising one or more cyclone collecting oil from supplied vapor that has not been collected in the first oil collection or oil mist consisting of small oil particles through centrifugal force to transfer the collected oil to the oil tank.

4. A method for recycling waste tires according to Claim 1, **characterized in that** the step of collecting oil further comprises a third oil collection comprising a separator tank directly contacting supplied vapor generated in the pyrolysis step with liquid oil aerationally to collect the oil.

5. A method for recycling waste tires according to Claim 1, **characterized in that** the step of pyrolyzing waste tires further comprises residues of the waste tires that were inserted into the pyrolysis furnace and pyrolyzed being eliminated outside to be pulverized and discharged by residue treatment step.

6. A method for recycling waste tires according to Claim 1, **characterized in that** in the step of injecting a carrier gas, the pyrolysis furnace is selectively supplied with a carrier gas through a carrier gas supply device comprising filler elements filled with a carrier gas formed by mixing at least one components of carbon dioxide, nitrogen, methanes, ethanes, propanes, butanes, pentanes, hexanes, ammonia and argons.

7. A method for recycling waste tires according to Claim 1, **characterized in that** the step of injecting a carrier gas comprises:
detecting oxygen by an oxygen detector installed in a carrier gas circulation line; and
removing oxygen present in the carrier gas circulation line if oxygen is detected, by approval of a sensing information connected to the oxygen detector.

8. A method for recycling waste tires according to Claim 7, **characterized in that** the step of removing oxygen uses any one of methods of heating by employing an electric heater generating heat by power supply or a heating element generating heat by being supplied with heat source of the heat exchanger, vacuuming with vacuum pressure on the pyrolysis furnace and the carrier gas circulation line, or pressurizing by supplying the carrier gas to the pyrolysis furnace and the carrier gas circulation line to push internal oxygen outside.

9. A method for recycling waste tires according to Claim 1, **characterized in that** the pyrolysis step further comprises:
collecting a noncondensable gas generated in the combustion of waste tires in the pyrolysis furnace and storing the collected gas; and
supplying the collected and stored noncondensable gas to the carrier gas circulation line that is connected to the pyrolysis furnace.

10. A method for recycling waste tires according to Claim 9, **characterized in that** the step of supplying the noncondensable gas to the carrier gas circulation line further comprises:
measuring the internal pressure of the carrier gas circulation line;
measuring the temperature inside of the pyrolysis furnace; and collecting a noncondensable gas flowing in the carrier gas circulation line and storing the collected gas if the pressure in the carrier gas circulation line is 100 mmAq or higher and the temperature in the pyrolysis furnace is 200°C or higher, or supplying the collected and stored carrier gas in the carrier gas circulation line if the pressure is less than 100 mmAq and the temperature in the pyrolysis furnace is less than 200°C.
